# EUROPEAN PATENT SPECIFICATION

(11) **EP 1 939 468 B1**
(45) Date of publication and mention of the grant of the patent: **28.04.2010**
(21) Application number: 07380390.0
(22) Date of filing: 27.12.2007
(51) Int. Cl.: F16B 37/16, F16B 35/06, G05G 1/10

(54) **Fixing knob**
Fixierknopf
Bouton de fixation

(30) Priority: 28.12.2006 ES 200602808 U
(43) Date of publication of application: 02.07.2008
(73) Proprietor: Seat, S.A., 08760 Martorell (ES)
(72) Inventor: Oliver Prats, Joan, c/o Seat, S.A., 08760 Martorell (Barcelona) (ES); Paris Garcia, Maite, c/o Seat, S.A., 08760 Martorell (Barcelona) (ES)
(74) Representative: Carvajal y Urquijo, Isabel

(56) References cited:
- CA-A1- 2 509 923
- US-A- 2 049 104
- US-A- 2 259 834
- US-A1- 2003 072 636
- US-A1- 2005 281 634

## Description

### Field of the Invention

The present invention relates to a fixing knob used as a connecting part, being formed by a nut and a casing giving it a greater volume to make its actuation easier, especially with an auxiliary rod, for example with the rod of a screwdriver.

Wing nuts which can be engaged with a lever are known from US-A-2049104 and US-A-2 259 834.

The knob of the invention can be used as a fixing or connecting means identical to that of a normal nut but with the advantage of having means which make its actuation easier, having special application in the automotive industry.

### Background of the Invention

The nuts used for connecting or fixing parts consist of a core generally in the form of a square or straight hexagonal part provided with a threaded axial through borehole. In order to tighten or loosen these nuts it is necessary to have a suitable wrench, a tool which is not always available.

This situation can present itself when having to tighten or loosen certain nuts of a vehicle, the tool supply of which does not usually include a wrench.

In certain parts of an automobile, for example in the trunk, it is also necessary that certain nuts are visible but at the same time it is desirable that such nuts are of little height so that they protrude as little as possible, implying yet another difficulty when having to tighten and loosen the nuts.

### Description of the Invention

The object of the present invention is to eliminate the problems set forth by means of a fixing knob including a nut and having means that make the actuation of said nut with the hand easier and the necessary tightening thereof can be carried out with a rod, for example with the rod of a screwdriver, a tool which does traditionally enter into the tool supply of an automobile

The knob of the invention is formed by a nut and an actuation casing. The nut can be of a square or hexagonal base.

The casing forming part of the knob of the invention comprises a disk which is fixed in a position centered at one of the bases of the nut perpendicular to such nut, said base having a hole which is an extension of the threaded borehole of the nut. The casing also includes at least two arms radially arranged around the nut fixed to the disk. These arms have a passage through which an actuation rod can be introduced. The casing can include only two diametrically opposite or three angularly equidistant radial arms. Furthermore the arms can start from the core or be slightly separated from such core.

As regards the passage of each arm, it can run transversally or longitudinally with respect thereto.

### Brief Description of the Drawings

The attached drawings show by way of a non-limiting example possible embodiments of the knob of the invention.

A more detailed description of the invention will be made next, with reference to these drawings in which:
Figure 1 is a perspective view of a fixing knob formed according to the invention.
Figure 2 is an upper plan view of the knob Figure 1.
Figure 3 shows a perspective view of a knob the casing of which includes two arms radially coming out from the nut.
Figure 4 is an upper plan view of the knob of Figure 3.
Figure 5 is a perspective view similar to Figure 3 of a knob with the radial arms coming out from the nut.
Figure 6 is an upper plan view of the knob of Figure 5.

### Detailed Description of an Embodiment

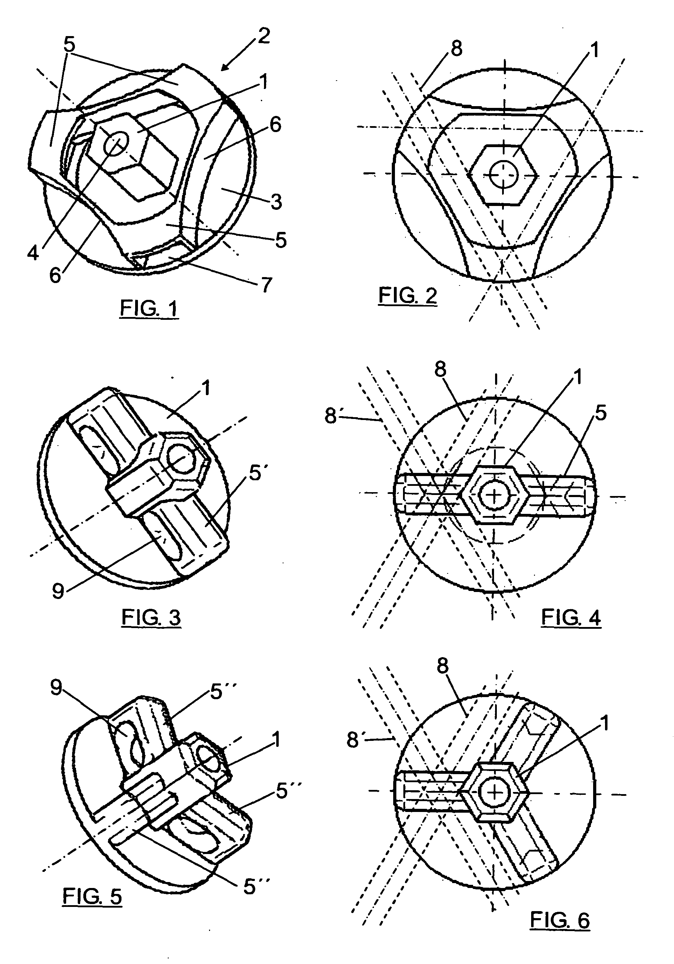

Figures 1 and 2 show a fixing knob formed according to the invention which is formed by a nut 1 with a hexagonal base and by a casing with general reference number 2. This casing is formed by a disk 3 which is perpendicularly fixed to one of the bases of the nut 1 in a centered position and has a hole which is an extension of the threaded borehole 4 of the nut. The casing further comprises three equidistant radial arms 5 which are connected to the disk 3 and are separated from the nut 1. The arms 5 are further connected by arched intermediate sections 6.

The arms 5 are hollow and open at their outer section 7, the width of this opening being such, together with the separation of the arched sections 6 of the nut 1, that a rod 8 can be introduced, represented by means of dotted lines in Figure 2, through two consecutive openings 7, so that said rod is tangent to one of the faces of the nut 1.

The rod 7, which can consist of the rod of a screwdriver, can be introduced through any two consecutive openings 7 and will serve to tighten or loosen the nut 1 with the required tension.

In the case of Figures 3 and 4, the arms with reference number 5' run radially from the nut 1 and have a transverse passage 9, which passage will be of a section increasing towards the holes on both sides of the arms 5' so that the rod 8 can be introduced in a position tangent to one of the faces of the nut 1, as in the case of Figure 2. Due to the widening of the passage 9 towards its hole the rod 8 can be introduced in two different positions 8 and 8' through the same passage, being supported on consecutive faces of the nut 1.

Finally, Figures 5 and 6 show a variant in which the casing includes three arms with reference number 5", which are separated from one another at 120º angles.

As in the case of Figures 3 and 4, the arms 5" have passages 9 with an identical configuration to the knob of Figure 3 in order to allow introducing rods in directions 8 and 8' both tangent to consecutive faces of the nut 1, as shown in Figure 6 and in Figure 4.

With the constitution described a fixing or connecting knob is available which allows loosening and tightening the nut 1 with the help of only a screwdriver the rod of which will be introduced through the corresponding passage. The arrangement described allows reducing the dimensions of the nut 1 so that they protrude as little as possible from the surface on which it is arranged.

The inclusion of the casing in the knob allows the assembly to be of a reduced height without it being any problem for its actuation.

The knob of Figures 1 and 2 allows accessibility of the actuation rod 8 every 60º around the nut 1. In the case of Figures 3 and 4 the accessibility will take place every 80º, whereas in the embodiment of Figures 5 and 6 said accessibility will be every 60º as in the case of Figures 1 and 2.

## Claims

1. A fixing knob formed by a nut (1) and an actuation casing (2), the casing of which comprises a disk (3) fixed perpendicularly in a central position of one of the bases of the nut and provided with a hole which is an extension of the borehole (4) of said nut, and at least two arms (5) radially arranged around the nut and fixed to the disk, **characterized in that** the arms (5) are traversed by a passage (7-9) through which an actuation rod (8) can be introduced perpendicular to the shaft of the nut.

2. A knob according to claim 1, **characterized in that** it comprises three equidistant hollowed arms (5) which are open on their outer section through as many other openings (7), every two consecutive openings of which establish a common passage which is tangent to one of the flat faces of the nut.

3. A knob according to claim 1, **characterized in that** it comprises two diametrically opposite arms (5') and the passages (9) perpendicularly traverse the arms and are of a section increasing toward the holes.

4. A knob according to claim 1 **characterized in that** it comprises three equidistant arms (5") and the passages (9) perpendicularly traverse the arms and are of a section increasing toward the holes.

## Patentansprüche

1. Befestigungsknopf, der durch eine Mutter (1) und ein Betätigungsgehäuse (2) gebildet ist, wobei dessen Gehäuse eine Scheibe (3), die rechtwinklig in einer mittigen Position einer der Grundflächen der Mutter befestigt und mit einem Loch versehen ist, bei dem es sich um eine Erweiterung der Bohrung (4) der Mutter handelt, und mindestens zwei Arme (5), die radial rund um die Mutter angeordnet und an der Scheibe befestigt sind, umfasst, **dadurch gekennzeichnet, dass** durch die Arme (5) ein Durchgang (7-9) hindurchführt, durch den eine Betätigungsstange (8) in rechtem Winkel zu dem Schaft der Mutter eingeführt werden kann.

2. Knopf nach Anspruch 1, **dadurch gekennzeichnet, dass** er drei in gleichen Abständen voneinander angeordnete hohle Arme (5) umfasst, die an deren äußeren Abschnitten durch ebenso viele äußere Öffnungen (7) offen sind, wobei jeweils zwei aufeinanderfolgende Öffnungen davon einen gemeinsamen Durchgang bilden, der tangential zu einer der flachen Flächen der Mutter ist.

3. Knopf nach Anspruch 1, **dadurch gekennzeichnet; dass** er zwei diametral entgegengesetzte Arme (5') umfasst und die Durchgänge (9) die Arme in rechtem Winkel durchqueren und einen zu den Löchern hin zunehmenden Querschnitt aufweisen.

4. Knopf nach Anspruch 1, **dadurch gekennzeichnet, dass** er drei in gleichen Abständen von einander angeordnete Arme (5") umfasst und die Durchgänge (9) die Arme in rechtem Winkel durchqueren und einen zu den Löchern hin zunehmenden Querschnitt aufweisen.

## Revendications

1. Bouton de fixation formé d'un écrou (1) et d'un boîtier d'actionnement (2), dont le boîtier comprend un disque (3) fixé perpendiculairement dans une position centrale d'une des bases de l'écrou et doté d'un orifice qui est une extension du trou (4) dudit écrou, et au moins deux bras (5) disposés radialement autour de l'écrou et fixés au disque, **caractérisé en ce que** les bras (5) sont traversés par un passage (7-9), à travers lequel une tige d'actionnement (8) peut être introduite perpendiculairement à l'arbre de l'écrou.

2. Bouton selon la revendication 1, **caractérisé en ce qu'**il comprend trois bras creux équidistants (5) qui sont ouverts sur leur section extérieure à travers autant d'autres ouvertures (7), dont toutes les deux ouvertures consécutives établissent un passage commun qui est tangent à l'une des faces planes de l'écrou.

3. Bouton selon la revendication 1, **caractérisé en ce qu'**il comprend deux bras diamétralement opposés (5') et les passages (9) traversent perpendiculairement les bras et sont d'une section qui augmente vers les trous.

4. Bouton selon la revendication 1, **caractérisé en ce qu'**il comprend trois bras équidistants (5") et les passages (9) traversent perpendiculairement les bras et sont d'une section qui augmente vers les trous.
